# EUROPÄISCHE PATENTSCHRIFT

(11) **EP 4 350 166 B1**
(45) Veröffentlichungstag und Bekanntmachung des Hinweises auf die Patenterteilung: **02.04.2025**
(21) Anmeldenummer: 23200431.7
(22) Anmeldetag: 28.09.2023
(51) Int. Cl.: F16D 65/18, F16J 3/04

(54) **BREMSSTEMPEL FÜR EINE SCHEIBENBREMSE EINES NUTZFAHRZEUGS**
BRAKE PLUNGER FOR A DISK BRAKE OF A COMMERCIAL VEHICLE
PISTON DE FREIN POUR UN FREIN À DISQUE D'UN VÉHICULE UTILITAIRE

(30) Priorität: 07.10.2022 DE 102022125922
(43) Veröffentlichungstag der Anmeldung: 10.04.2024
(73) Patentinhaber: KNORR-BREMSE Systeme für Nutzfahrzeuge GmbH, 80809 München (DE)
(72) Erfinder: MOLNAR, Markus, 94081 Fürstenzell (DE); MARKL, Michael, 94508 Schöllnach (DE)

(56) Entgegenhaltungen:
- EP-A1- 3 341 626
- DE-A1- 10 234 642
- US-A1- 2001 047 913

## Beschreibung

Die vorliegende Erfindung betrifft einen Bremsstempel für eine Scheibenbremse eines Nutzfahrzeugs gemäß dem Oberbegriff des Anspruchs 1. Die Erfindung betrifft des Weiteren eine Zuspanneinrichtung für eine Scheibenbremse eines Nutzfahrzeugs.

Gattungsgemäße Bremsstempel sind in zahlreichen Varianten aus dem Stand der Technik bekannt, so beispielsweise aus der EP 2520820 B1, DE 102012006114 A1 und US 2001/047913 A1.

Die Bremsstempel sind dabei üblicherweise so ausgeführt, dass sie eine Stellspindel mit einem Gewinderohr und einem Spindelfuß und ein an dem Spindelfuß angeordnetes Druckstück aufweisen. Scheibenbremse Die Stellspindel dient dabei der Verschleißnachstellung der Scheibenbremse, um den Abrieb der Bremsbeläge durch Nachstellen der Bremsstempel ausgleichen zu können.

Um das Druckstück und die Stellspindel vor Umwelteinflüssen wie Schmutz, Wasser und dergleichen zu schützen, werden die Bremsstempel üblicherweise an zwei Schnittstellen mittels eines Faltenbalgs abgedichtet. Der Faltenbalg ist dabei zum einen am Druckstück und zum anderen am Bodenblech eines Bremssattels angebracht.

Die Dichtstelle am Druckstück wird dabei entweder über eine feste Dichtstelle zur Anbringung eines Endes des Faltenbalgs an einem relativ zur Stellspindel um die Drehachse der Stellspindel frei drehenden Druckstück realisiert.

Alternativ, bei sich mit der Stellspindel drehendem Druckstück, erfolgt die Anbringung des Faltenbalgs an das Druckstück über eine sogenannte Schleifdichtung, die beispielsweise in einer Nut in einem Halsstück des Druckstücks aufgenommen ist.

Eine solche Nut hat aus fertigungstechnischer Sicht den Nachteil, dass diese nur über einen gesonderten spanenden Prozess in das Druckstück eingebracht werden kann, der bei einer Fertigung des Druckstücks über einen reinen Umformprozess entfallen könnte.

Dazu ist es aus der EP 2520820B1 beispielsweise bekannt, eine solche Nut nicht im Druckstück, sondern in der Stellspindel vorzunehmen, was allerdings den Nachteil mit sich bringt, dass die Übergangsstelle zwischen Stellspindel und Druckstück durch den Faltenbalg nicht geschützt ist.

Aufgabe der vorliegenden Erfindung ist es, einen Bremsstempel für eine Scheibenbremse eines Nutzfahrzeugs bereitzustellen, mit dem in einfacher Weise ein Faltenbalg an einem Druckstück anbringbar ist.

Diese Aufgabe wird durch einen Bremsstempel für eine Scheibenbremse eines Nutzfahrzeugs mit den Merkmalen des Anspruchs 1 gelöst.

Der erfindungsgemäße Bremsstempel weist eine Stellspindel mit einem Gewinderohr und einem Spindelfuß sowie ein an dem Spindelfuß axial zu einer Längsachse der Stellspindel angeordnetes Druckstück auf.

Das Druckstück weist eine dem Gewinderohr abgewandte, an einen Bremsbelag der Scheibenbremse andrückbare Andruckfläche, ein von der Andruckfläche entferntes Halsstück und ein Übergangsstück zwischen der Andruckfläche und dem Halsstück mit sich von einem Umfangsradius des Halsstücks bis zu einem Umfangsradius der Andruckfläche aufweitenden Umfangsradius auf.

An dem Halsstück ist ein Pressring mit einer ringförmigen, am Halsstück anliegenden Andruckfläche zur Ausbildung einer Aufnahm zwischen einer dem Übergangsstück zugewandten Unterseite des Pressrings und dem Übergangsstück aufgepresst.

Mit einem solchen auf das Halsstück des Druckstücks aufgepressten Pressring ist in einfacher Weise ermöglicht, eine Nut zur Anbringung eines Faltenbalgs zu schaffen, ohne die Nut in einen gesonderten spanenden Prozess in das Druckstück einbringen zu müssen.

Vorteilhafte Ausführungsvarianten der Erfindung sind Gegenstand der Unteransprüche.

Gemäß einer vorteilhaften Ausführungsvariante ist der Pressring im Querschnitt I-förmig ausgebildet, mit einem von der Andruckfläche radial zur Längsachse der Stellspindel nach außen abstehendem Steg, dessen Unterseite zur Ausbildung der Aufnahmenut dient.

Die I-Form des Pressrings ermöglicht zum einen einen sicheren Halt über die Andruckfläche des Pressrings an dem Druckstück und zum zweiten durch den von diesem abstehenden Steg eine hinreichend bemessene Wandung für die zusammen mit dem Übergangsstück zu bildende Nut für die Halterung der vorzugsweise als Faltenbalg ausgebildete Dichtung.

Gemäß einer alternativen Ausführungsvariante ist der Pressring im Querschnitt rechteckig ausgebildet, wobei die Materialstärke des Pressrings parallel zur Andruckfläche des Druckstücks wenigstens 2 mm beträgt.

Auch ein solchermaßen ausgebildeter Pressring gewährleistet den notwendigen Halt am Halsstück des Druckstücks und durch die Dicke des Pressrings von wenigstens 2 mm eine hinreichend sich erstreckende Seitenwand für die zu bildende Nut.

Gemäß einer weiteren alternativen Ausführungsvariante ist der Pressring im Querschnitt dreieckig ausgebildet, wobei die Länge der dem Übergangsstück zugewandten Unterseite des Pressrings wenigstens 2 mm beträgt.

Auch ein solchermaßen im Querschnitt dreieckig ausgebildeter Pressring ermöglicht die Ausbildung einer solchen Nut.

Gemäß einer vorteilhaften Weiterbildung der Erfindung ist ein aus dem Spindelfuß in Richtung der Längsachse der Stellspindel vorstehender Zapfen in einer für diesen vorgesehene Zapfenaufnahme des Druckstücks aufgenommen.

Alternativ steht aus einer der Andruckfläche abgewandten Stirnfläche des Druckstücks in Richtung der Längsachse der Stellspindel ein Zapfen in eine für diese vorgesehene Zapfenaufnahme des Spindelfußes vor.

Die erfindungsgemäße Zuspanneinrichtung, die in einem Bremssattel einer Scheibenbremse für ein Nutzfahrzeug angeordnet ist, weist einen Bremshebel, eine Brücke, an der sich der Bremshebel abstützt sowie mindestens einen Bremsstempel auf, wobei an dem Ende der Brücke, das dem Bremshebel abgewandt ist, mindestens eine Stellspindel des mindestens einen Bremsstempels in Richtung der Längsachse der Stellspindel verstellbar gelagert ist.

Ein Gewinderohr der mindestens einen Stellspindel weist ein mit einem Innengewinde der Brücke korrespondierendes Außengewinde auf. Der Bremsstempel ist dabei wie oben beschrieben ausgebildet.

In einer vorteilhaften Ausführungsvariante der Zuspanneinrichtung ist in der Aufnahmenut zwischen dem Pressring und dem Zwischenstück ein erster Endring eines Faltenbalgs befestigt.

Nachfolgend werden bevorzugte Ausführungsbeispiele anhand der beiliegenden Zeichnungen näher erläutert.

Es zeigen:
- Fig. 1: eine Schnittdarstellung eines aus dem Stand der Technik bekannten Bremsstempels mit umfänglicher Nut im Druckstück,
- Fig. 2: eine Schnittdarstellung einer Ausführung eines erfindungsgemäßen Bremsstempels mit am Druckstück angebrachtem Pressring.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsstempels, der Stellspindel, des Druckstücks, des Pressrings und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

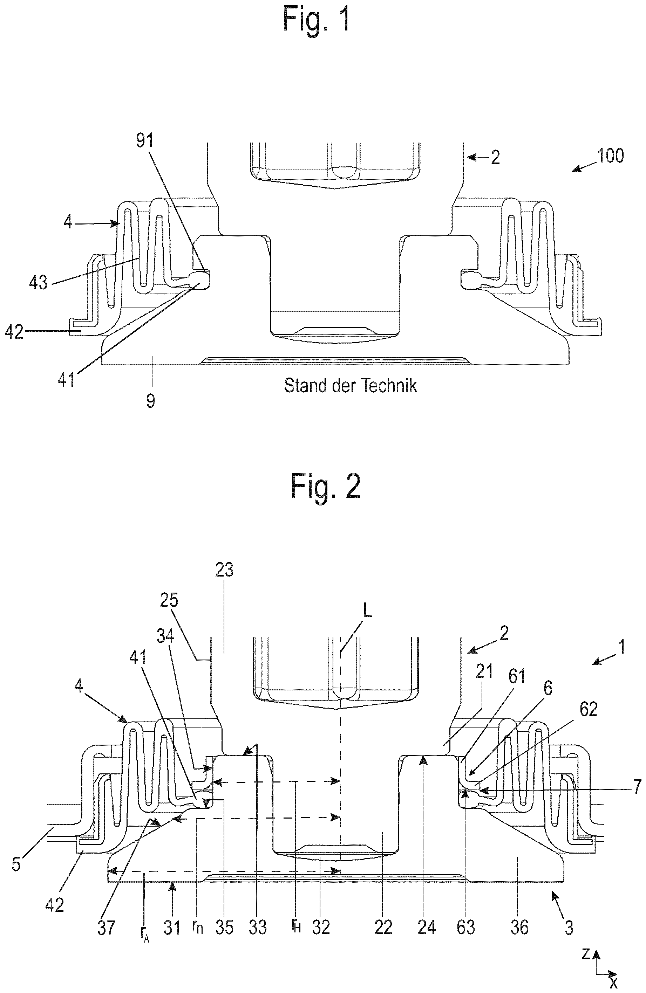

**Fig. 1** zeigt einen Aufbau eines aus dem Stand der Technik bekannten Bremsstempels 100 für eine Scheibenbremse eines Nutzfahrzeugs.

Ein solcher Bremsstempel 100 ist dabei üblicherweise in einem Bremssattel der Scheibenbremse aufgenommen und als Bestandteil einer Zuspannvorrichtung mit einer Stellspindel 2, die ein Druckstück 9 trägt, beim Auslösen eines Bremsvorganges einen zuspannseitigen Bremsbelage gegen eine Bremsscheibe drückt.

Die Stellspindel 2 des Bremsstempels steht dabei üblicherweise in Wirkverbindung mit einer Nachstelleinrichtung zur verschleißbedingten Nachstellung eines Lüftspiels, um einen Abrieb eines Reibbelags des Bremsbelags auszugleichen.

Um die Schnittstelle zwischen Druckstück 9 und Stellspindel 2 sowie der weiteren sich in diesem Bereich des Bremssattels befindlichen Innenmechanik vor Umwelteinflüssen wie Schmutz, Staub oder Wasser zu schützen, ist zwischen einem Bodenblech des Bremssattels und dem Druckstück 9 ein Faltenbalg 4 angeordnet.

Der Faltenbalg 4 ist bei dem aus dem Stand der Technik bekannten Druckstück in einer im Druckstück eingefrästen Nut 91 mit einem ersten Endring 41 aufgenommen.

Ein zweiter Endring 42 des Faltenbalgs 4 wird am Bodenblech des Bremssattels befestigt.

Zwischen den beiden Endringen 41, 42 weist der Faltenbalg 4 eine Vielzahl von Flanken 43 auf, durch die je nach Abstand zwischen den beiden Endringen 41, 42 ein Entfalten des Faltenbalgs 4 ermöglicht ist.

In **Fig. 2** ist mit dem Bezugszeichen 1 insgesamt ein erfindungsgemäßer Bremsstempel 1 bezeichnet.

Dieser Bremsstempel 1 weist ebenfalls eine Stellspindel 2 mit einem Gewinderohr 23 und einem Spindelfuß 21 auf sowie ein an dem Spindelfuß 21 axial zu einer Längsachse L der Stellspindel 2 angeordnetes Druckstück 3.

Das Druckstück 3 weist eine dem Gewinderohr 23 abgewandte, an einen Bremsbelag der Scheibenbremse andrückbare Andruckfläche 31 auf, sowie ein von der Andruckfläche 31 entferntes Halsstück 34 und ein Übergangsstück 36 zwischen der Andruckfläche 31 und dem Halsstück 34 mit sich von einem Umfangsradius r_{H} des Halsstücks 34 bis zu einem Umfangsradius r_{A} der Andruckfläche 31 aufweitenden Umfangsradius r_{U}.

Eine Anlagefläche 24 der Stellspindel 2 liegt im montierten Zustand an einer der Andruckfläche 31 abgewandten Stirnfläche 33 des Druckstücks 3 an.

Wie weiter in Fig. 2 gezeigt ist, ist an dem Halsstück 34 ein Pressring 6 aufgepresst.

Der Pressring 6 weist eine ringförmigen, am Halsstück 34 anliegende Andruckfläche 61 zur Ausbildung einer Aufnahmenut 7 zwischen einer dem Übergangsstück 36 zugewandten Unterseite 63 des Pressrings 6 und dem Übergangsstück 36 auf.

Durch den auf das Halsstück 34 des Druckstücks 3 aufgepressten Pressring 6 wird so eine Aufnahmenut 7 geschaffen, in der der erste Endring 41 des Faltenbalgs 4 aufnehmbar ist.

Das Übergangsstück 36 des Druckstücks 3 ist, wie in Fig. 2 zu erkennen ist, bevorzugt so gestaltet, dass dieses von dem Halsstück 34 weg sich zunächst in radialer Richtung, betrachtet zur Längsachse der Stellspindel 2 oder einer Zentralachse des Druckstücks 3, eine parallel zur Andruckfläche 31 ausgebildete Stufe 35 ausbildet.

Von dieser Stufe 35 weg verjüngt sich das Druckstück 3 in seiner in Richtung der Längsachse L der Stellspindel 2 betrachteten Richtung nach außen, so dass die Mantelfläche des Übergangsstücks 36 in einer Schrägen 37 nach außen abfallend ausgebildet ist.

Der Pressring 6 ist bevorzugt im Querschnitt I-förmig ausgebildet, mit einer von der Andruckfläche 61 radial zur Längsachse L der Stellspindel 2 nach außen abstehenden Steg 62, dessen Unterseite 63 zur Ausbildung der Aufnahmenut 7 dient.

Die Querschnittsbetrachtung des Pressrings 6 erfolgt dabei in einer x-zRichtung, wie sie in Figur 2 gezeigt ist.

Denkbar ist auch, den Pressring 6 im Querschnitt rechteckig auszubilden, wobei in diesem Fall die Materialstärke des Pressrings 6 parallel zur Andruckfläche 31 des Druckstücks 3 wenigstens 2mm beträgt.

Denkbar sind auch andere Querschnittsgestaltungen des Pressrings 6, so beispielsweise eine dreieckige Querschnittsausbildung, bei der die Länge der dem Übergangsbereich 36 zugewandten Unterseite 63 des Pressrings 6 wenigstens 2 mm beträgt.

Betreffend die Anordnung des Druckstücks 3 an der Stellspindel 2 steht gemäß einer bevorzugten Ausführungsvariante ein Zapfen aus dem Spindelfuß 21 in Richtung der Längsachse L der Stellspindel 2 vor und ist in einer für diesen vorgesehene Zapfenaufnahme 32 des Druckstücks 3 aufgenommen. Eine solche Ausführungsvariante ist in Fig. 2 dargestellt.

In einer alternativen Ausführungsvariante kann auch vorgesehen sein, dass der Zapfen aus einer der Andruckfläche 31 abgewandten Stirnfläche 33 des Druckstücks 3 in Richtung der Längsachse L der Stellspindel 2 vorstehend in einer für diesen vorgesehene Zapfenaufnahme des Spindelfußes 21 aufgenommen ist.

### Bezugszeichenliste

- 1, 100: Bremsstempel
- 2: Stellspindel
- 21: Spindelfuß
- 22: Zapfen
- 23: Gewinderohr
- 24: Anlagefläche
- 25: Außengewinde

- 3: Druckstück
- 31: Andruckfläche
- 32: Zapfenaufnahme
- 33: Stirnfläche
- 34: Halsstück
- 35: Stufe
- 36: Übergangsbereich
- 37: Schrägfläche

- 4: Faltenbalg
- 41: erster Endring
- 42: zweiter Endring
- 43: Flanke

- 5: Bodenblech

- 6: Pressring
- 61: Andruckfläche
- 62: Steg
- 63: Unterseite

- 7: Aufnahmenut

- 9: Druckstück
- 91: Aufnahmenut

- L: Längsachse
- X: Richtung
- Z: Richtung

- r_{H}: Umfangsradius
- r_{U}: Umfangsradius
- r_{A}: Umfangsradius

## Patentansprüche

1. Bremsstempel (1) für eine Scheibenbremse eines Nutzfahrzeugs, aufweisend
- eine Stellspindel (2) mit einem Gewinderohr (23) und einem Spindelfuß (21) und
- ein an dem Spindelfuß (21) axial zu einer Längsachse (L) der Stellspindel (2) angeordnetes Druckstück (3),
- wobei das Druckstück (3) eine dem Gewinderohr (23) abgewandte, an einen Bremsbelag der Scheibenbremse andrückbare Andruckfläche (31), ein von der Andruckfläche (31) entferntes Halsstück (34) und ein Übergangsbereich (36) zwischen der Andruckfläche (31) und dem Halsstück (34) mit sich von einem Umfangsradius (r_{H}) des Halsstücks (34) bis zu einem Umfangsradius (r_{A}) der Andruckfläche (31) aufweitenden Umfangsradius (r_{U}) aufweist,
**dadurch gekennzeichnet, dass**
- an dem Halsstück (34) ein Pressring (6) mit einer ringförmigen, am Halsstück (34) anliegenden Andruckfläche (61) zur Ausbildung einer Aufnahmenut (7) zwischen einer dem Übergangsbereich (36) zugewandten Unterseite (63) des Pressrings (6) und dem Übergangsbereich (36) aufgepresst ist.

2. Bremsstempel (1) nach Anspruch 1,
**dadurch gekennzeichnet, dass**
der Pressring (6) im Querschnitt I-förmig ausgebildet ist, mit einem von der Andruckfläche (61) radial zur Längsachse (L) der Stellspindel (2) nach außen abstehendem Steg (62), dessen Unterseite (63) zur Ausbildung der Aufnahmenut (7) dient.

3. Bremsstempel (1) nach Anspruch 1,
**dadurch gekennzeichnet, dass**
der Pressring (6) im Querschnitt rechteckig ausgebildet ist, wobei die Materialstärke des Pressrings (6) parallel zur Andruckfläche (41) des Druckstücks (4) wenigstens 2mm beträgt.

4. Bremsstempel (1) nach Anspruch 1,
**dadurch gekennzeichnet, dass**
der Pressring (6) im Querschnitt dreieckig ausgebildet ist, wobei die Länge der dem Übergangsbereich (36) zugewandten Unterseite (63) des Pressrings (6) wenigstens 2mm beträgt.

5. Bremsstempel (1) nach einem der vorhergehenden Ansprüche,
**dadurch gekennzeichnet, dass**
ein Zapfen aus dem Spindelfuß (21) in Richtung der Längsachse (A) der Stellspindel (2) vorstehend in einer für diesen vorgesehene Zapfenaufnahme (32) des Druckstücks (3) aufgenommen ist.

6. Bremsstempel (1) nach einem der vorhergehenden Ansprüche,
**dadurch gekennzeichnet, dass**
ein Zapfen aus einer der Andruckfläche (31) abgewandten Stirnfläche (33) des Druckstücks (3) in Richtung der Längsachse (L) der Stellspindel (2) vorstehend in einer für diesen vorgesehene Zapfenaufnahme des Spindelfußes (21) aufgenommen ist.

7. Bremsstempel (1) nach einem der vorhergehenden Ansprüche,
**dadurch gekennzeichnet, dass**
in der Aufnahmenut (7) ein erster Endring (41) eines Faltenbalgs (4) befestigt ist.

8. In einem Bremssattel einer Scheibenbremse für ein Nutzfahrzeug angeordnete Zuspanneinrichtung, aufweisend
- einen Bremshebel,
- eine Brücke, an der sich der Bremshebel abstützt,
- mindestens ein Bremsstempel (1),
- wobei an dem Bremshebel abgewandten Ende der Brücke mindestens eine Stellspindel (2) des mindestens einen Bremsstempels (1) in Richtung der Längsachse der Stellspindel (2) verstellbar gelagert ist,
- wobei ein Gewinderohr (23) der mindestens einen Stellspindel (2) ein mit einem Innengewinde der Brücke korrespondierendes Außengewinde (25) aufweist,
**dadurch gekennzeichnet, dass**
- der Bremsstempel (1) gemäß einem der vorstehenden Ansprüche ausgebildet ist.

## Claims

1. Brake plunger (1) for a disk brake of a commercial vehicle, having
- an adjusting spindle (2) with a threaded pipe (23) and a spindle foot (21) and
a pressure piece (3) arranged on the spindle foot (21) axially to a longitudinal axis (L) of the adjusting spindle (2),
- wherein the pressure piece (3) has a contact pressure surface (31) facing away from the threaded pipe (23) and capable of being pressed against a brake lining of the disc brake, a neck piece (34) remote from the contact pressure surface (31) and a transitional region (36) between the contact pressure surface (31) and the neck piece (34) that has a circumferential radius (r_{U}) widening from a circumferential radius (m) of the neck piece (34) to a circumferential radius (r_{A}) of the contact pressure surface (31),
**characterized in that**
- a press ring (6) with an annular contact pressure surface (61) bearing on the neck piece (34) is pressed onto the neck piece (34) to form a receiving groove (7) between an underside (63) of the press ring (6) facing the transitional region (36) and the transitional region (36).

2. Brake plunger (1) according to claim 1,
**characterized in that**
the press ring (6) is configured to be I-shaped in cross-section, with a web (62) projecting outwards radially from the contact pressure surface (61) to the longitudinal axis (L) of the adjusting spindle (2), the underside (63) of which is used for forming the receiving groove (7).

3. Brake plunger (1) according to claim 1,
**characterized in that**
the press ring (6) is configured to be rectangular in cross-section, wherein the material thickness of the press ring (6) parallel to the contact pressure surface (41) of the pressure piece (4) is at least 2 mm.

4. Brake plunger (1) according to claim 1,
**characterized in that**
the press ring (6) is configured to be triangular in cross-section, wherein the length of the underside (63) of the press ring (6) facing the transitional area (36) is at least 2 mm.

5. Brake plunger (1) according to any one of the preceding claims,
**characterized in that**
a pin protruding from the spindle foot (21) in the direction of the longitudinal axis (A) of the adjusting spindle (2) is received in a pin receiver (32) of the pressure piece (3) provided for this purpose.

6. Brake plunger (1) according to any one of the preceding claims,
**characterized in that**
a pin from an end face (33) of the pressure piece (3) facing away from the contact pressure surface (31) is received projecting in the direction of the longitudinal axis (L) of the adjusting spindle (2) in a pin receiver of the spindle foot (21) provided for this purpose.

7. Brake plunger (1) according to any one of the preceding claims,
**characterized in that**
a first end ring (41) of a bellows (4) is secured in the receiving groove (7).

8. Clamping apparatus arranged in a brake caliper of a disk brake for a commercial vehicle, having
- a brake lever,
- a bridge, on which the brake lever is supported,
- at least one brake plunger (1),
wherein at least one adjusting spindle (2) of the at least one brake plunger (1) is mounted at the end of the bridge facing away from the brake lever so as to be adjustable in the direction of the longitudinal axis of the adjusting spindle (2),
- wherein a threaded pipe (23) of the at least one adjusting spindle (2) has an external thread (25) corresponding to an internal thread of the bridge,
**characterized in that**
- the brake plunger (1) is configured according to any one of the preceding claims.

## Revendications

1. Tampon de freinage (1) pour un frein à disque d'un véhicule utilitaire, présentant
- une broche de réglage (2) avec un tube fileté (23) et un pied de broche (21) et
- une pièce de pression (3) agencée au niveau du pied de broche (21) axialement à un axe longitudinal (L) de la broche de réglage (2),
- dans lequel la pièce de pression (3) présente une surface de pression (31) éloignée du tube fileté (23), pouvant être pressée contre une garniture du frein à disque, une pièce de cou (34) éloignée de la surface de pression (31) et une zone de transition (36) entre la surface de pression (31) et la pièce de cou (34) avec un rayon périphérique (r_{U}) s'élargissant d'un rayon périphérique (m) de la pièce de cou (34) à un rayon périphérique (r_{A}) de la surface de pression (31),
**caractérisé en ce que**
- un anneau de pression (6) avec une surface de pression (61) annulaire reposant contre la pièce de cou (34) est pressé sur la pièce de cou (34) pour la formation d'une rainure de réception (7) entre un côté inférieur (63) tourné vers la zone de transition (36) de l'anneau de pression (6) et la zone de transition (36).

2. Tampon de frein (1) selon la revendication 1,
**caractérisé en ce que**
l'anneau de pression (6) est formé en section transversale en forme de I, avec une nervure (62) dépassant vers l'extérieur de la surface de pression (61) radialement à l'axe longitudinal (L) de la broche de réglage (2), nervure dont le côté inférieur (63) sert à la formation de la rainure de réception (7).

3. Tampon de frein (1) selon la revendication 1,
**caractérisé en ce que**
l'anneau de pression (6) est formé en section transversale de manière rectangulaire, dans lequel l'épaisseur de matériau de l'anneau de pression (6) parallèlement à la surface de pression (41) de la pièce de pression (4) s'élève à au moins 2 mm.

4. Tampon de frein (1) selon la revendication 1,
**caractérisé en ce que**
l'anneau de pression (6) est formé en section transversale de manière triangulaire, dans lequel la longueur du côté inférieur (63) tourné vers la zone de transition (36) de l'anneau de pression (6) s'élève à au moins 2 mm.

5. Tampon de frein (1) selon l'une quelconque des revendications précédentes,
**caractérisé en ce que**
un tenon dépassant du pied de broche (21) en direction de l'axe longitudinal (A) de la broche de réglage (2) est reçu dans un logement de tenon (32) de la pièce de pression (3) prévu pour celui-ci.

6. Tampon de frein (1) selon l'une quelconque des revendications précédentes,
**caractérisé en ce que**
un tenon dépassant d'une surface avant (33) de la pièce de pression (3) éloignée de la surface de pression (31) en direction de l'axe longitudinal (L) de la broche de réglage (2) est reçu dans un logement de tenon du pied de broche (21) prévu pour celui-ci.

7. Tampon de frein (1) selon l'une quelconque des revendications précédentes,
**caractérisé en ce que**
un premier anneau d'extrémité (41) d'un soufflet (4) est fixé dans la rainure de réception (7).

8. Dispositif de serrage disposé dans un étrier de frein d'un frein à disque pour un véhicule utilitaire présentant
- un levier de frein,
- un pont contre lequel le levier de frein s'appuie,
- au moins un tampon de frein (1),
- dans lequel au moins une broche de réglage (2) de l'au moins un tampon de frein (1) est logée de manière réglable au niveau de l'extrémité du pont éloignée du levier de frein en direction de l'axe longitudinal de la broche de réglage (2),
- dans lequel un tube fileté (23) de l'au moins une broche de réglage (2) présente un filetage extérieur (25) correspondant à un filetage intérieur du pont,
**caractérisé en ce que**
- le tampon de frein (1) est formé selon l'une quelconque des revendications précédentes.
